Europäisches Patentamt

**European Patent Office**

Office européen des brevets

(19)

(11) Publication number : **0 433 479 B1**

(12) **EUROPEAN PATENT SPECIFICATION**

(45) Date of publication of patent specification :
06.09.95 Bulletin 95/36

(51) Int. Cl.⁶ : **H02K 29/06, H02K 1/27**

(21) Application number : **89123525.1**

(22) Date of filing : **20.12.89**

(54) **Brushless DC motor and its rotor magnet.**

(43) Date of publication of application :
26.06.91 Bulletin 91/26

(45) Publication of the grant of the patent :
06.09.95 Bulletin 95/36

(84) Designated Contracting States :
**BE DE FR GB IT NL SE**

(56) References cited :
**DE-A- 3 102 492**
**DE-A- 3 229 458**
**DE-A- 3 331 194**
**FR-A- 2 386 928**
**US-A- 4 549 104**

(73) Proprietor : **MINEBEA CO.,LTD.**
**4106-73, Miyota**
**Oaza**
**Miyota-cho**
**Kitasaku-gun Nagano-ken (JP)**

(72) Inventor : **Suzuki, Yuzuru**
**Minebea Co., Ltd.**
**R & D Laboratory**
**1743-1, Asana**
**Asaba-cho Iwata-gun Shizuoka-ken (JP)**
Inventor : **Fujitani, Sakae**
**Minebea Co., Ltd.**
**R & D Laboratory**
**1743-1, Asana**
**Asaba-cho Iwata-gun Shizuoka-ken (JP)**
Inventor : **Takahashi, Hitoshi**
**Minebea Co., Ltd.**
**R & D Laboratory**
**1743-1, Asana**
**Asaba-cho Iwata-gun Shizuoka-ken (JP)**

(74) Representative : **Kreutz, Karl Jürgen, Dipl.-Ing.**
**Patentanwalt**
**Osterwaldstrasse 149**
**D-80805 München (DE)**

EP 0 433 479 B1

## Description

### Technical field of the invention

A brushless DC motor comprising:
a stator having stator magnet poles and inter-poles;
a rotor consisting of a rotor magnet lined on the inner wall of the rotor yoke and being composed of magnetic zones same in shape and in number of said stator magnet poles, each zone being magnetized radially and differently from the two adjacent zones, so that each magnetic zone is magnetized identically as the diametrically opposite magnetic zone.

### Prior Art

A motor of this kind is disclosed in US patent no. 3,299,335. In this motor the magnetic pattern formed on the rotor magnet divides the rotor circumference into 3P / 2 equal sectors, where P is the number of poles, in the order N pole, S pole and non-magnetized area. This magnetised pattern keeps the electromagnetic force from vanishing at a certain rotor position and so stabilises starting of the motor.

### The problems of the prior art

The prior art motor enjoys stable driving torque and small detent torque, but it requires mon-magnetised areas at the rotor magnet.

This, however, makes it difficult to mass-produce such motors of uniform characteristics.

Also differences in the used magnetising devices (magnetisation power supply, magnetisation voltage, electrostatic capacity of power supply, etc.) or changes of surrounding temperature cause an uneven space distribution of magnetic flux density. Being largely dependent on the magnetic pattern of the rotor magnet, the motor characteristics vary acutely when space distribution of magnetic flux density is uneven.

Furthermore, if a magnetic field sensor is used for rotor position sensing, a rotor position sensing magnet is needed in addition to the torque-generating rotor main magnet. This makes the rotor construction even more complicated.

The same is true with certain motors according to the FR-A-2 386 928. This document also shows motors with grooved rotor magnets, which have only one pair of poles. These motors are more simple and therefore more easy to be fabricated, but because of only two poles, there are only two pulses for each revolution, and therefore the power is reduced. Four-poled rotor magnets are also disclosed, in which the magnet consists of a single cylindrical anisotropic magnet (Fig. 23A), or of zones of different magnetic materials (Fig. 25), or in which a pair of grooves is provided, each extending over half the circumference of the rotor (Fig. 28).

### Object and solution of the invention

The present invention has for its object to eliminate the problems of the prior art as thus far described and relates to a brushles DC motor and a rotor magnet to be used therein, wherein said rotor magnet is entirely magnetised with no non-magnetised areas required, facilitating the magnetisation, and space distribution of magnetic flux density is less uneven, without rotor position sensing magnet and with great power.

The invention solves the problems by the following features:

The rotor magnet has no non-magnetized areas; a pair of axially directed grooves is provided, one of which lies directly opposite to the other, one half of each groove being formed in a respective one magnetic zone, the other half being formed in the adjacent magnetic zone; and

a single magnetic field sensor is arranged in a position facing the grooved surface of the rotor magnet to cooperate therewith to provide a rotor position signal. "Grooves" refers also to an instance where non-magnetised reinforcements are filled in such grooves and even to an instance where plastic magnets are filled in the grooves cut in a high-performance magnet such as a rare-earth magnet.

### Preferred embodiments

### Brief explanation of the Drawings

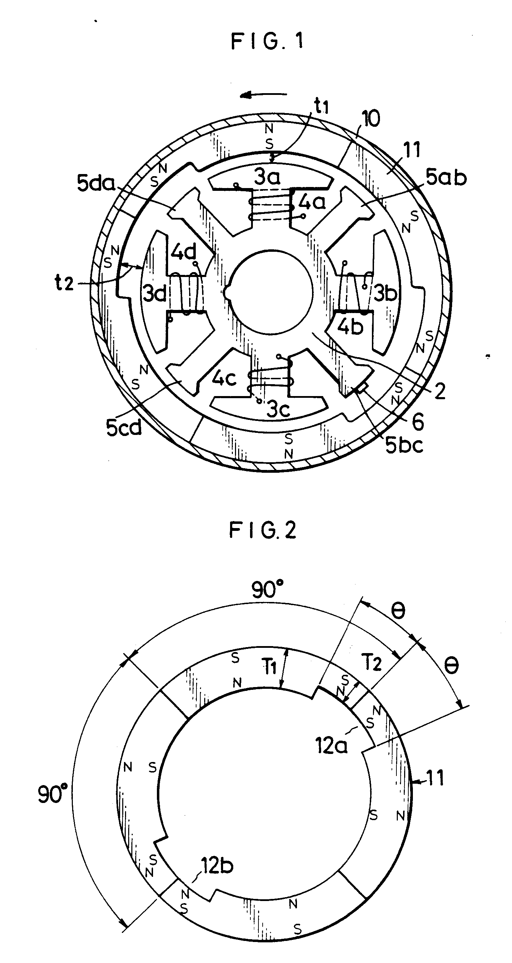

Fig. 1 shows in cross section a motor according to this invention.
Fig. 2 shows the rotor magnet used in Fig. 1.

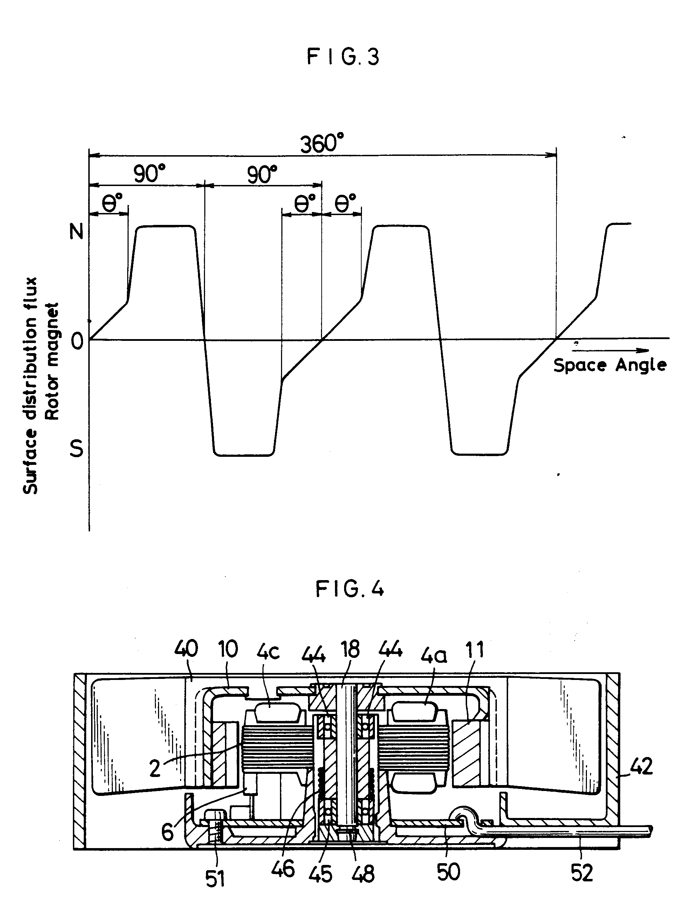

Fig. 3 is a graphic of surface distribution of magnetic flux density of the magnet.

Fig. 4 is a sectionial view of a fan motor to which this invention is applied as one of its applications.

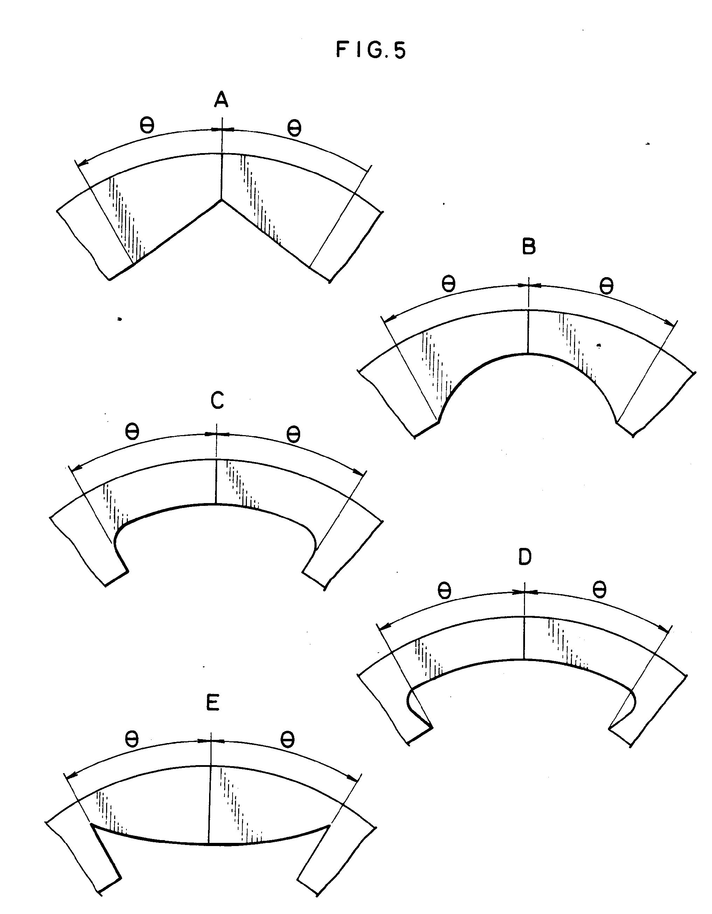

Fig. 5 A-E show sectional shapes of the groove cut in the respective rotor magnet.

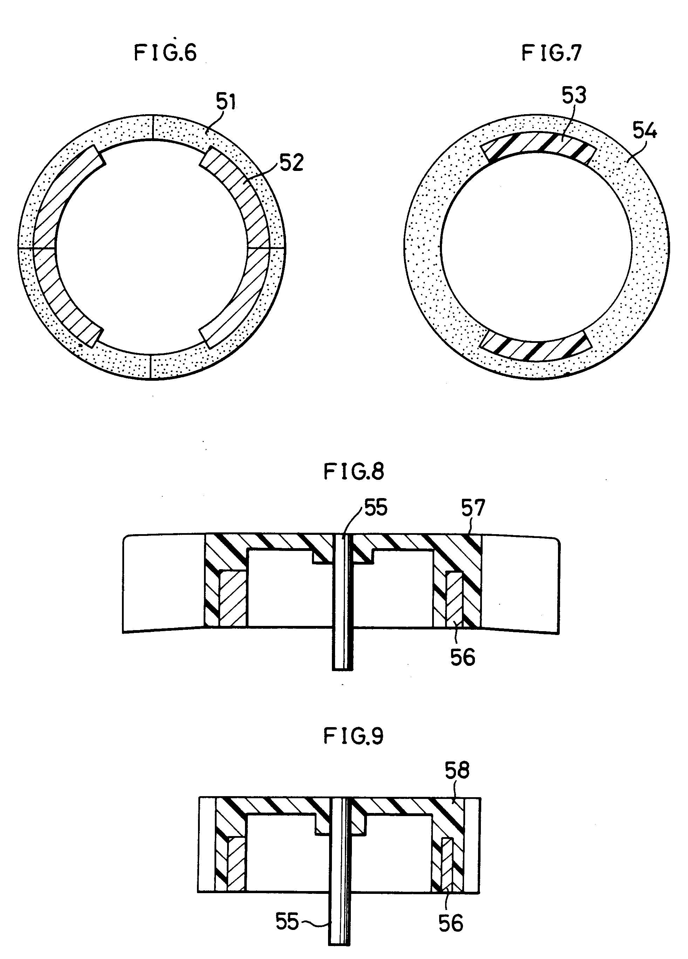

Fig. 6 and 7 show diffent shapes in a cross sectional view of the rotor magnet.

Fig. 8 and 9 show a different structure in a sectional view of the rotor.

Detailed description

Figure 1 is a principle view of the brushless DC motor relating to this invention and an example of a 4 pole outer-rotor-type motor.

The stator consists of a stator yoke 2, four stator magnet poles 3a, 3b, 3c, 3d, positioned to the stator yoke 2 in succession at an angle of 90°; around each stator pole a coil 4a, 4b, 4c and 4d is wound, and four inter-poles 5ab, 5bc, 5cd and 5da are positioned just between the magnet poles.

A magnetic converter 6 detects the position of the rotor; this converter 6 is a hall element or the like, installed on top of inter-pole 5bc.

The rotor consists of a cylindrical rotor yoke 10 and a rotor magnet 11 at the inside of rotor yoke 10 with a rotor axis (not illustrated) for free rotation.

The details of the rotor magnet 11 are shown in Figure 2, and the magnetic flux density at its surface in Figure 3.

Rotor magnet 11 is radially magnetised with four poles and has two grooves 12a, 12b. One half of each groove is formed in the one magnet piece, the other half is formed in the respective adjacent magnet piece. The central angle of each groove is $2\theta$, counting from the neutral point or magnet switching point $1\theta$ at the one magnet piece and $1\theta$ at the adjacent magnet piece. The surface magnetic flux density of the rotor magnet 11 is shown in Figure 3. At the grooves 12a, 12b (within angle $2\theta$) the magnetic flux density at the surface, with which the magnetic poles of the stator are intersected, is low and changes from South to North.

The order of the grooves and the magnetic poles is as follows:

N-pole $(90° - \theta) \rightarrow$ S-pole $(90° - \theta) \rightarrow$ Groove S-pole $(\theta) \rightarrow$ Groove N-pole $(\theta) \rightarrow$ N-pole $(90° - \theta) \rightarrow$ S-pole $(90° - \theta) \rightarrow$ Groove S-pole $(\theta) \rightarrow$ Groove N-pole $(\theta)$.

One characteristic of this Invention lies in the following: the magnetic grooves are formed so as to give magnetic changes in a circumferential direction, and the rotor magnet is so constructed that is can be magnetised without any non-magnetised area, and so a rotor position detecting magnet is not necessary. The operation principle of such motor is the same as that of the aforementioned conventional technology. With the position relationship between rotor magnet 11 and magnetising converter 6 fixed as shown in Figure 1, if coils 4b and 4d are energised, and stator magnetic poles 3b and 3d are excited to N poles respectively, the N poles of rotor magnet 11 and the N poles of stator magnetic poles 3b and 3d repel each other magnetically and the rotor rotates anti-clockwise (in the direction of the arrow). After 90° rotation, coil 4b and 4d are de-energised, and coils 4a and 4c are energised. This causes stator magnetic poles 3a, 3c, to be excited to N poles respectively. As the result, the motor continues to rotate anti-clockwise because the N pole of rotor magnet 11 and the N poles of stator magnetic poles 3a and 3c repel each other magnetically.

Inter-poles 5ab, 5bc, 5dc and 5da function as a generator of torque (no dead point) at any positions of the rotor.

Each time the rotor rotates through 90°, magnetic field sensor 6 detects the changes of the magnetic poles and energises the pair of coils 4a and 4c, and the pair of coils 4b and 4d alternatively. This causes the rotor to rotate continuously in one direction.

In connection with this invention, an experiment was made with rotor magnets 11 shown in Figure 2 and for comparison with a conventional-type rotor magnet, to find the effects of groove angles $\theta$ on the characteristics of the motor. With four different angles, 15°, 20°, 30° and 40° of the groove 12a, 12b, when a motor axis torque of 10g-cm was applied, the motor rotation numbers, the motor current and the motor efficiency were measured. The results are shown in the following table:

| | Conventional Technology | Invented Technology | | | |
|---|---|---|---|---|---|
| Characteristics | | $\theta = 15$ | $\theta = 20$ | $\theta = 30$ | $\theta = 40$ |
| Number of Motor Rotation (rpm) | 3250 | 3080 | 3200 | 3560 | 3300 |
| Motor Current (mA) | 140 | 125 | 125 | 118 | 125 |
| Motor Efficiency (%) | 20 | 21,1 | 21,9 | 26 | 23 |

The Table shows that compared with the conventional technology, this Invention produces a low current value and a rise in efficiency of 1 to 6 %. With a 4-pole magnetised rotor magnet, it became clear that the motor is most efficient in the vicinity of $\theta = 30°$. The experiment shown in the Table was made based on the relationship of t2 = 4t1, in which the gap between the rotor magnet and the stator is t1, and the gap between the groove and the stator is t2. This is determined by the magnetic flux density distribution and the experiment results. Therefore, it is desirable that the shape of the groove formed in the rotor magnet should be designed to satisfy the following two formulas :

$$0,3 \times 360 / P < 2\theta < 360 / P \quad (1)$$
$$D \geqq G \quad (2)$$

Where:

$2\theta$ : Groove width (degrees) in the stator opposing surface as viewed from a central angle

P: Number of magnetised poles

D: Center depth of the groove

G: Minimum gap between the stator and the rotor magnet

The brushless motor related to this invention is applicable for many purposes. Good starting and high efficiency are the characteristics of the motor, which is suitable for products such as fan-motors.

Figure 4 shows a fan with a motor according to the invention. Same parts have the same reference numbers as in Figure 1.

Impeller 40, molded in one piece with synthetic resin, has in the inner side the Rotor Yoke 10 which is heat-clinched and fastened.

Rotor shaft 18 is free to rotate in bearings 44 and 45 fitted into the housing 42, and is held in position with a retaining ring 48 after a spring 46 is adjusted to a given preload. The stator, with coil 4a ... 4d wound on the stator yoke 2, laminated and then insulated, is fixed to the bearing holder located in the center of the housing 42.

Circuit board 50 is fastened with screw 51 to the inner side of housing 42. A logic circuit for coil excitation conversion, switching elements and magnetic field sensor 6 for rotor position sensor etc. are mounted on the circuit board 50, to which the terminal of each coil 4a ... 4d is also connected. The required power is supplied from the outside source with wire 52.

The groove in the rotor magnet is not limited to a single rectangle shape. There may be other different shapes such as examples A-E in Figure 5.

ex A shows a V-shape groove.

ex B is a semicircle.

ex C is a groove with R-shape on both sides of its bottom.

ex D is a groove of which the bottom is curved out on both edges.

ex E is a groove of which the bottom is shaped to form a swelled curve toward the face of the stator.

Other examples of the rotor magnet are shown Figures 6 and 7. To improve the characteristics, the rotor magnet may be made of a high performance magnet such as a sintered or a rare-earth magnet. If they would be used for the whole of the rotor magnet, however, it would be costly, far from cost-effective in many cases. Therefore, Fig. 6 shows that high quality magnets 52 such as sintered or rare-earth magnet are used in the desired location of, and as part of, the rotor magnet and cheaper and easy-to-mold plastic magnet 51 are used in the desired shape for the remaining part. That is the way the rotor magnet comes out well in cost performance.

Fig. 7 is a structure with appropriate reinforcement material 53 filling up the grooved part of the rotor magnet 54.

For instance, non-magnetic plastics serve the purpose of reinforcement 53. Moreover, plastic magnets are adaptable as reinforcement 53 for the rotor magnet 54, in which high performance magnets such as sintered or rare-earth magnets are used.

Fig. 8 and Fig. 9 show a practical structure of the rotor. If the impeller must be joined with the rotor like a fan-motor for instance, it should be designed to make a combination of rotor magnet 56, shaft 55 and reinforcement 57 (impeller for fanmotor) in a complete form and unit, as in Fig. 8.

Fig. 9 is another combining form in which rotor magnet 56 and shaft 55 are joined by reinforcement 58, that incorporates gears on the circumference.

Such instances of structure are not all that this invention covers. The type explained above is an outer-rotor type motor. In like manner, an inner-rotor type can be made up in a combining form with high efficiency gained as well without counting on a driving system or a number of magnetic poles. Of course it is possible to make changes of the magnet, the reinforcement material and the components structured by the reinforcement. This rotor is applicable to a photoelectro-type rotor position sensor system in addition to a magnetic field sensor aided rotor position sensor system.

## Claims

1. A brushless DC motor comprising:
   a stator having stator magnet poles (3a, 3b, 3c, 3d) and inter-poles (5ab, 5bc, 5cd, 5da);
   a rotor consisting of a cylindrical rotor magnet (11) lined on the inner wall of a rotor yoke (10) and being composed of magnetic zones of the same shape and equal in number to the said stator magnetic poles, each zone being magnetized radially and differently from the two adjacent zones, so that each magnetic zone is magnetized identically to the diametrically opposite magnetic zone;
   characterized in that:
   the rotor magnet (11) has no non-magnetized areas;
   a pair of axially directed grooves (12a, 12b) is provided, one of which lies directly opposite to the other, one half of each groove being formed in a respective one magnetic zone, the other half being formed at the adjacent magnetic zone; and
   a single magnetic field sensor (6) is arranged in a position facing the grooved surface of the rotor magnet (11) to cooperate therewith to provide a rotor position signal.

2. Motor according to claim 1,
   characterized in that
   the shape of the grooves (12a, 12b) is represented by the following two formulas:
   $$0.3 \times 360° / P < 2\theta < 360° / P$$
   $$D \geqq G,$$
   wherein P is the number of magnetized poles,
   $2\theta$ is the angle subtended by each groove at the centre of the rotor,
   D is the depth of the grooves at their centre,
   G is the smallest gap between the stator and the rotor magnet.

3. Motor according to claim 1,
   characterized in that magnetic materials of different properties are combined for forming the rotor magnet (11).

4. Motor according to claim 1,
   characterized in that reinforcement material (53) is filled in the grooves (12a, 12b).

## Patentansprüche

1. Bürstenloser Gleichstrommotor, umfassend:
   einen Stator mit Magnetpolen (3a, 3b, 3c, 3d) und Nebenpolen (5ab, 5bc, 5cd, 5da);
   einen Rotor, bestehend aus einem zylindrischen Rotormagneten (11) an der Innenwand eines Rotor-Jochs (10), wobei der Rotormagnet aus magnetischen Zonen von untereinander gleicher Form bzw. Gestalt und in gleicher Anzahl wie die Magnetpole besteht, wobei jede magnetische Zone radial und unterschiedlich von den beiden benachbarten Zonen magnetisiert ist, so daß jede magnetische Zone identisch wie die diametral gegenüberliegende magnetische Zone magnetisiert ist; gekennzeichnet durch:

der Rotormagnet (11) hat keine nicht-magnetischen Bereiche/Zonen;

ein Paar axialer Nuten (12a, 12b) ist vorgesehen, von denen die eine direkt der anderen gegenüberliegt, und wobei eine Hälfte jeder Nut in jeweils einer magnetischen Zone gebildet ist, während die andere Hälfte in der benachbarten/angrenzenden magnetischen Zone geformt ist; und

ein einzelner Magnetfeldsensor (6) ist angeordnet in einer Position gegenüber/zugewandt der genuteten Oberfläche des Rotormagneten (11) zur Kooperation mit der genuteten Rotoroberfläche zur Lieferung eines Rotorpositionssignals.

2. Motor gemäß Anspruch 1, dadurch gekennzeichnet, daß die Gestalt der Rotor-Nuten (12a, 12b) folgenden zwei Formeln entspricht:

$$0{,}3 \times 360 / P < 2\,\theta < 360 / P$$
$$D \geqq G$$

wobei P die Anzahl der magnetisierten Pole ist,

$2\,\theta$ ist die Nutweite, vom Drehpunkt aus gesehen,

D ist die zentrale Tiefe der Nut,

G ist der Minimalspalt zwischen Stator und Rotormagnet.

3. Motor gemäß Anspruch 1,
dadurch gekennzeichnet, daß magnetische Materialien verschiedener Eigenschaften kombiniert sind zur Bildung des Rotormagnets (11).

4. Motor gemäß Anspruch 1,
dadurch gekennzeichnet, daß Versteifungsmaterial (53) in die Nuten (12a, 12b) eingefüllt ist.

**Revendications**

1. Un moteur à courant continu sans balais comprenant :
un stator ayant des pôles aimantés (3a, 3b, 3c, 3d) et des interpoles (5 ab, 5 bc, 5 cd, 5 da);
un rotor composé d'un aimant cylindrique (11) placé sur la paroi interne de la culasse du rotor (10) et composé de zones magnétiques de même forme et égales en nombre aux dits pôles magnétiques du stator, chaque zone étant magnétisée radialement et différemment des deux zones adjacentes, de sorte que chaque zone magnétique est magnétisée de façon identique à la zone magnétique diamétralement opposée;
caractérisée par le fait que:
l'aimant du rotor (11) n'a pas de zone non-magnétisée;
on trouve une paire de gorges creusées dans le sens de l'axe (12 a, 12 b), dont l'une est disposée directement à l'opposé de l'autre, une moitié de chaque gorge formant respectivement une zone magnétique, l'autre moitié formant la zone adjacente à la zone magnétique; et un seul capteur de champ magnétique (6) est positionné face à la surface rainurée de l'aimant rotor (11) pour permettre de donner un signal de la position du rotor.

2. Moteur selon la revendication 1, caractérisé par le fait que la forme des gorges (12 a, 12 b) est représentée par les deux formules suivantes:

$$0.3 \times 360° / P < 2\,\theta < 360° / P$$
$$D \geqq G,$$

dans lesquelles :

P représente le nombre de pôles magnétiques,

$2\theta$ représente l'angle sous-tendu par chaque gorge au centre du rotor,

D représente la profondeur des gorges en leur centre,

G le plus petit écart entre le stator et l'aimant du rotor.

3. Moteur selon la revendication 1, caractérisé par le fait que les matériaux magnétiques qui ont des propriétés différentes sont combinés pour former l'aimant du rotor (11).

4. Moteur selon la revendication 1, caractérisé par le fait qu'un matériau de consolidation (53) est introduit dans les gorges (12 a et 12 b).

F I G. 1

F I G. 2

## F I G. 3

## FIG. 4

FIG.5

FIG.6

51

52

FIG.7

53

54

FIG.8

55    57

56

FIG.9

58

55    56